# EUROPEAN PATENT APPLICATION

(11) **EP 2 080 648 A1**
(43) Date of publication of application: **22.07.2009**
(21) Application number: 08103180.9
(22) Date of filing: 31.03.2008
(51) Int. Cl.: B60H 1/00, B60J 3/04, G02F 1/163

(54) **Climate control system**

(30) Priority: 21.01.2008 EP 08100691
(71) Applicant: Visiocorp Patents S.à.r.l., 1653 Luxembourg (LU)
(72) Inventor: Bruhnke, Ulrich, 71139, Ehningen (DE); Wilfinger, Kurt, 71563, Affalterbach (DE); Steffel, Hans-Clemens, 73027, Stuttgart (DE)
(74) Representative: Rausch, Gabriele

(57) **Abstract**

The invention is related to a climate control system with one electrochrome dimmable device capable of variably reducing the transmission of radiation through a window, and a climate control unit coupled to and adapted to control the dimmable device. The dimmable device includes at least one inherent conductive polymer and at least one ionic liquid. The dimmable device is controlled to change colours and/or dimming levels by applying a voltage pulse of a first electrical polarisation (V1) for darkening and a second reverse polarized voltage pulse (V2) for bleaching.

## Description

### TECHNICAL FIELD OF THE INVENTION

The present invention relates to a climate control system and more specifically to a climate control system capable of increasing the comfort and lowering the energy consumed for the heating or cooling of a building or a vehicle.

### TECHNICAL BACKGROUND

There are mainly two situations when energy is consumed to maintain the indoor climate in a building; when heating or cooling is required. Heating of a building is done in situations when the outdoor temperature is lower than the desired indoor temperature, and when heating through absorption of heat radiation and other internal sources than the heating system is insufficient.

Throughout this application heat radiation refers to electromagnetic radiation in the visible and solar ranges, i. e. wavelengths(X) between 3 x10-7 and 3 x 10-6 m. The main source of this heat radiation is of course the sun. This heat radiation is absorbed by the outside walls and the roof, as well as by the interior of the building, if the radiation passes through a window. Cooling, on the other hand, has to be done when the outdoor temperature is essentially higher than the desired indoor temperature, or when the combined effect of e. g. the outdoor temperature, heat radiation, and heating by other internal sources than the heating system, produces an indoor temperature that is higher than desired.

In large parts of the world, heating of buildings by intake of heat radiation through windows is a big problem, especially for buildings with large window areas. It is therefore of great interest to reduce this contribution to the heating by controlling this intake of heat radiation. On the other hand, such a system must not reduce the intake of daylight to such an extent that there is insufficient daylight for the persons being inside the building.

Today, the most frequently used techniques for variably reducing incoming heat radiation through windows include different types of mechanical shades, such as blinds, curtains and the like, that are either completely non-transparent, semi transparent or translucent.

In the near future "smart windows" may be commonly used in a large group of applications. Smart windows are particularly suitable for varying the intake of daylight as their transmittance of the whole or a part of the heat radiation range, may be continuously changed from transparent to non-transparent.

In this application a "smart window" represents any type of variably transmissive element integrated in a window pane, such as electro chromic elements.

Known systems comprising smart windows, such as the systems presented in WO 96/13751, include thermal and/or radiation sensors for controlling the transmission through the windows. In these systems the transmission through the windows is controlled to achieve a predetermined temperature or radiation level, and the main goal is to save energy.

A sophisticated solution is described in WO0221231 wherein sensor control signals of different sensors are used and combined to optimize the climate in a building. The used smart window representations has the common feature that they need a voltage across the window to remain in the darken status. Even if only a small current is necessary to maintain status of darkening the power consumption will sum up to a certain extend.

### SUMMARY OF THE INVENTION

The object of the invention is to provide a new climate control system, which overcome the drawbacks of the prior art devices. This is achieved by the climate control system as defined in claim 1.

One advantage of the system according to the invention is that it, compared to prior art devices, decreases the power consumption of the system by using smart window material that does not need a constant voltage across for darkening maintenance. As a result the overall power consumption is reduced dramatically.

In a further embodiment the switching power need by the smart window is contributed by a solar cell.

Embodiments of the invention are defined in the dependent claims.

### SHORT DESCRIPTION OF THE FIGURES

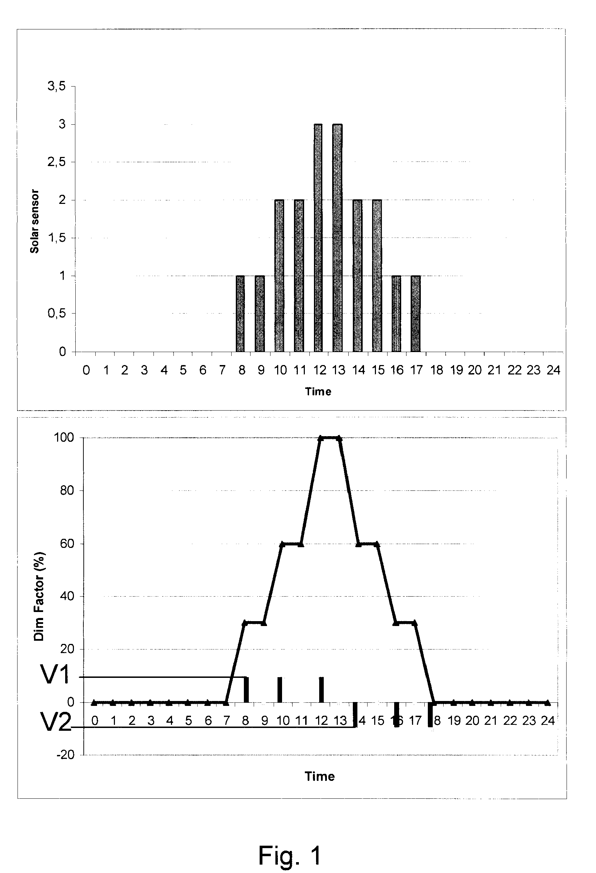

Fig. 1 is time diagram for measuring and dimming a window
Fig. 2 is a schematic representation of the control
Fig. 3a, 3b are schematic representation of a dimming window
Fig. 4 is a schematic embodiment with solar cell
Fig. 5 is a first example to implement solar cells
Fig. 6 is a second embodiment
Fig. 7 is a third embodiment

### DETAILED DESCRIPTION OF PREFERRED EMBODIMENTS

The basic idea behind the system of the present invention is that, if a room needs to be cooled, the transmission of heat radiation through the windows of the room is influenced according the parameter sets pre defined by building management system.

In a basic embodiment, the climate control system of the invention operates independently of the other climate systems of a building, such as the cooling/heating system and the illumination system.

The preferred electro chromatic material is described in WO02063073 and WO02053808. In these two patent applications a material system is described that allows the production of colouring and darkening material easily to apply on window glass. The preferred material is a combination of inherently conducting polymer (ICP) with a solid liquid as electrolyte and solvent. The advantage of this material set is that the polymers can be selected according their colours and reaction times. The electrolyte ionic liquid is non-toxic, a criteria important for the commercial and broad use of the materials.

To fabricate solid-state conjugated polymer electro chromic devices in two polymer-coated electrodes are required: an anodically coloring polymer, and a cathodically coloring polymer. As an example, polyaniline (PANI) and poly (3,4-ethylenedioxythiophene) (PEDOT) were employed as anodically and cathodically coloring polymers, respectively. Both polymers were electrochemically deposited onto patterned ITO-coated glass electrodes from ionic liquids. The present polymer electrodes can be used directly for device fabrication without the necessity for a drying process as is commonly employed for polymers synthesized in aqueous electrolytes. Thus, the use of ionic liquids as electrolytes for the synthesis and generation of electroactivity of polyaniline ensures the long-term stability of the resulting polymer.

Among the different electroactive polymers used in practical applications, poly(3,4-ethylenedioxythiophene) (PEDOT) is a stable electroactive conjugated polymer. PEDOT can be formed by oxidatively polymerizing 3,4-ethylenedioxythiophene (EDOT) monomer by wet chemical polymerization, electrochemical polymerization or vapour phase polymerization. A common method for obtaining PEDOT films is to polymerize EDOT via wet chemical oxidation and then apply the polymer to a substrate using a suitable coating process, such as dip coating, spin coating, printing, spray coating, etc. A difficulty with this approach to film formation is that PEDOT is difficult to maintain in solution. In response to this difficulty polyelectrolytes, such as poly(styrenesulfonate), have been used to form stable PEDOT:polyelectrolyte suspensions. However, the use of a polyelectrolyte can adversely affect the conductivity of the PEDOT film.

Electrochemical polymerization can also be used to deposit PEDOT films on substrates. Thus, EDOT monomer can be coated onto a conductive substrate and the sample placed into a three electrode cell with an electrolyte. A periodic voltage can be cycled across the cell, with each cycle increasing the amount of PEDOT deposited on the substrate. After 20-40 cycles film growth is generally finished.

Whilst the PEDOT films formed using this method are generally high in quality, the deposition technique only allows for PEDOT films to be formed on conductive substrates and the technique is not well suited to large scale and/or commercial applications.
PEDOT films have also been formed on substrates by vapour phase polymerization of EDOT. In this method, a substrate is coated with an oxidant and the oxidant coated substrate is placed in to a chamber containing EDOT monomer in the vapour phase. Under appropriate conditions the monomer condenses on the substrate and polymerizes, creating a highly conductive and homogenous PEDOT film.

Vapour phase polymerization methods were initially developed using FeCl₃ or H₂O₂ as oxidant in the formation of polypyrrole films. Subsequently, iron(III) tosylate was used as oxidant in the vapour phase polymerization of pyrrole. More recently, iron(III) tosylate has been used as oxidant in the vapour phase polymerization of EDOT to produce PEDOT films. However, the homogeneity of films made via vapour phase polymerization has tended to be inferior to those made by solvent casting. It has been suggested (Winther-Jensen, et al., Macromolecules 2004, 37, 5930-5935) that the poor film quality obtained using FeCl₃ and/or iron(III) tosylate in the vapour phase polymerization may result from the formation of crystal-like structures in the oxidant layer. It has also been found that the oxidant iron(III) tosylate produced an undesirable polymerization route for EDOT which resulted in partially conjugated polymer chains.

There is a need for processes for producing PEDOT films, and other polyaryl or polyheteroaryl polymer films, that overcome one or more of the aforementioned problems with known processes. Alternatively, or in addition, there is a need for processes for producing PEDOT films, and other polyaryl or polyheteroaryl polymer films, that have a commercially acceptable conductivity for use in electrochromic devices. Alternatively, or in addition, there is a need for processes for producing PEDOT films, and other polyaryl or polyheteroaryl polymer films, having commercially acceptable conductivity to produce relatively large scale electrochromic devices, such as windows. Alternatively, or in addition, there is a need for processes for producing PEDOT films, and other polyaryl or polyheteroaryl polymer films, on substrates other than glass, such as plastic substrates.

The resulting electro chromatic layers are produces in one embodiment directly on window glass and covered by window glass as well.

In another embodiment the polymers are deposited onto an electrically transparent layered plastic film. This foil type electro chromatic material can be fixed on a window glass and allows the use of the material in existing buildings. Specially for isolation windows with three glass screens the electro chromatic film is put between two screens in a fist space using the isolating vacuum in the second space between the glasses.

The material dims a window in a few seconds. The dimming status achieved depends only on the voltage that is applied across the electro chromatic polymer area. The electro chromic layer works as a capacity loaded by a defined current. The resulting polymer reaction is reversible but stable up to the moment a reverse voltage is applied.

The status of colouring and darkening maintain for hours without additional power consumption to maintain this status. To intensify the ratio of darkening the maximal voltage is applied which depends on the material but limited to a value under 2 V. One example system in prior art reports that colouring (at +1.0V) and bleaching (at-1.7V) were completed within 1.5 s, respectively. The bleaching of the window material is done with a reverse voltage pulse. The pulse needed to switch the electro chromatic device or to bleach out the device has duration of between milliseconds to several seconds dependant on the window area.

In figure the dimming function is explained schematically. The diagram on the top shows a randomized signal of a solar sensor, e.g. a normal photodiode. Dependent from the daylight input the sensors generated an output voltage. In example the sensor provides four levels of output signal starting with a zero signal. During a day - marked on the x- scale of the diagram he input light increases and decreases. According this sensor signal the dimming status of the electro chromic material is increased and decreased. This function is shown in the diagram below. The dimming degree varies between zero and 100% of darkening. To achieve the dimming effect a voltage pulse charges the electro chromic cel, the window. With each voltage pulse as represented by V1 the level of dimming is increased. With the reverse pulses V2 the electro chromic window is cleared step by step by discharging the electro chromatic cell.

The energy saving is due to the fact that constant current is not necessary to maintain the dark.

In one embodiment the climate control system the heating/cooling system (the daylight control system), the ventilation system and the illumination system in a building, are integrated into a total climate control system. Such an integrated control system assures that a minimum of energy is needed to keep the desired climate and light level inside the building at all times. Furthermore, such a system is preferably arranged in such a manner that each room in the building can be independently controlled according to a local set of climate parameters. For example users can set parameters for a room temperature, for incoming daylight level and total light level. For each room to be controlled, the control system registers internal parameters such as temperature, incoming daylight level and total light level. Further, the climate control system may detect external parameters such as temperature, daylight intensity level, humidity.

These parameters, together with geometric and physical information regarding the building, are used as input data in the control system.

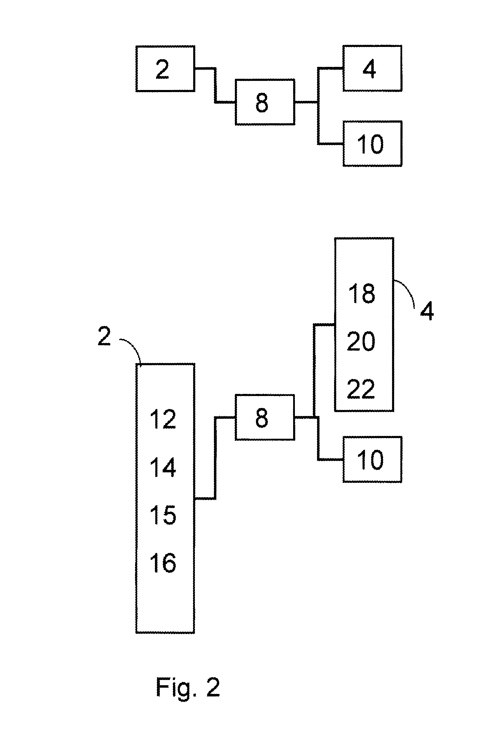

In a preferred embodiment of the present invention, which is shown in fig 2, the climate control system is comprised of parameter control systems 2, indoor climate sensors 4, which all are coupled to a climate control unit 8. Optionally, the climate control system further comprises outdoor climate sensors 10.

The parameter control systems 2 comprise at least one variable radiation reducer 12, a cooling/heating system 14, a ventilation system 15 and an illumination system 16.

The indoor climate sensors 4 comprise, in each room wherein the climate is to be controlled, at least one sensor for detection of a total light level 18, at least one sensor for detection of an incoming daylight level 20, and at least one sensor for detection of a temperature 22 . The total light level sensor 18 is arranged such that it registers the light level in the room, which is a sum of incoming daylight and light produced by the illumination system 16.

The incoming daylight sensor (s) 20 is arranged such that it registers the amount of daylight that enters the room through the window (s).

The climate control unit 8 comprises a microprocessor unit, which controls the indoor climate.

Alternatively the control panel may be substituted by a remote control or a software control panel running on a computer coupled to the climate control unit 8.

The window transmittance parameters preferably comprise a low transmittance parameter defining the lowest level of incoming daylight that is accepted by the user, and a high-transmittance parameter defining the highest level of incoming daylight that is accepted by the user. These two parameters are essential as they allow the user of the room to avoid an unwanted excess or deficiency of daylight in the room, in situations when the climate control system from an energy minimization point of view strive towards such conditions.

The climate control unit 8 registers the output signals from the indoor climate sensors 4, and the outdoor climate sensors 10, and uses these output signals to control the parameter control systems 2 according to local control parameters and the global control parameters to achieve the desired indoor climate.

As mentioned above the climate control system are further adapted to control the light-level, by controlling the illumination system 16, the temperature and air quality by controlling the cooling/heating system 14 and the ventilation system 15. But, as control strategies for such systems are well known in prior art, detailed control information for those are not given herein.

The climate control system is also suitable for integration into a larger control system, e. g. in the advanced control and information system of an "intelligent building".

The invention has been described using the term variable radiation-reducer 12, as defined above, but as mechanical systems exhibit some drawbacks compared to smart windows, the use of smart windows is the preferred implementation.

A mechanical system may either be arranged on the outside, in between, or on the inside of the windows. If it is arranged on the outside, which from the heat rejecting point of view is the most beneficial, the system is further subjected to mechanical strains due to wind etc., whereby it can easily be damaged.

Irrespective of where such a mechanical system is arranged the mechanical nature of the system makes it vulnerable, as it normally comprises a large number of parts and some parts may break or get worn out. Another drawback with the mechanical systems is that the radiation reducing elements normally comprise one or more non-transparent parts, which generate an unwanted pattern of silhouettes. As the transmittance for smart windows may be continuously varied from transparent to non-transparent, all such effects are avoided.

If a building is protected by smart windows and they are in the dark status day light is shield out. However, as the smart windows 12 that are available at present have switch times (between non-transmittance and full-transmittance) of the order of milliseconds to seconds, the daylight contribution to the light level in the room may remain low for a while after triggering clearing of the window.

Therefore, the climate control system has to compensate for this lack of daylight by increasing the light intensity produced by the illumination system 16, and as the windows 12 become more transparent, the light intensity from the illumination system 16 is gradually reduced.

There seems to be a "trade off situation between natural lighting and cooling, i. e. higher fraction of natural light gives higher cooling demand and if the cooling demand is reduced by lower transmittance, less natural light is available. The static windows, on the other hand, may need additional shading to avoid glare, while the smart window can automatically reduce such problems.

Approximate savings versus the best static window in an office module are of the order of: 10-150kWh/m2year for different climate conditions. These results will in a real situation also be affected by occupant behaviour, but it is clear that the smart windows can have an equal or better energy performance than static windows and on top of this give an increased comfort with, for instance, automatic glare control. Furthermore, regulated lighting and ventilation also save electricity.

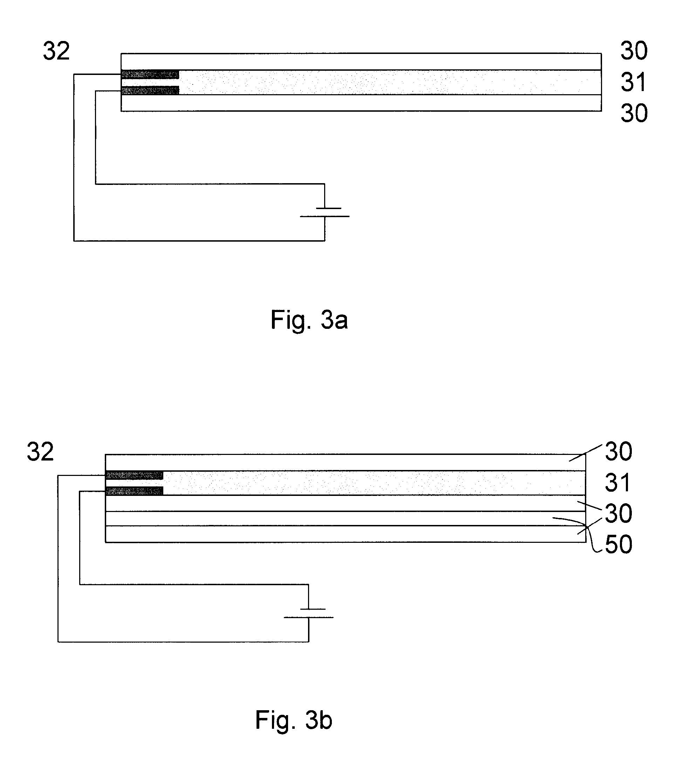

Fig. 3a explains a smart window version according the invention. Between two glass layers 30 an electro chromic material 31 is placed which is contacted by electrodes 32 that are connected to a power supply. The electro chromic layer can be printed on the glass or sprayed on the glass support. The glass structure of Fig 3 is a part of a multi pane window. In a building using the invention the control unit 8 will control the voltage applied to the window to dim the room behind.

Fig 3 b shows a smart window comprising three glass planes structure. The three panes 30 are fixed with a dedicated distance. The first space between the panes is filed with the electro chromic material 31 to reduce energy impact into the building; the second space between the next panes is the isolating in addition by a vacuum 50.

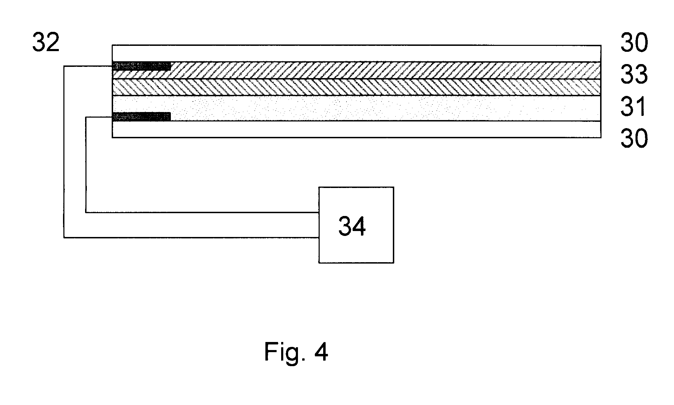

In Fig. 4 the smart window further comprises a solar cell structure as an independent power source for the dimmable window. The glass 30 protects a solar cell transparent in the visible region of light. Such solar cells are known in prior art in form of only UV absorbing solar cells with a special photovoltaic cell designed of ZnO and CuAlO2. Other materials are also tested today.

Another possible material are solar cells with structured wafers and a porous structure achieved by production. These cells are transmitting around 10% of the light which will not be enough for a whole window in a building. In this schematic example the electrodes are directly connected to a first layer of the solar cell and the layer of the Electro chromic material. The direct contact makes intermediate levels - as isolators -obsolete. The regulation 34 allows a controlled voltage signal over the time and according other parameters as discussed before.

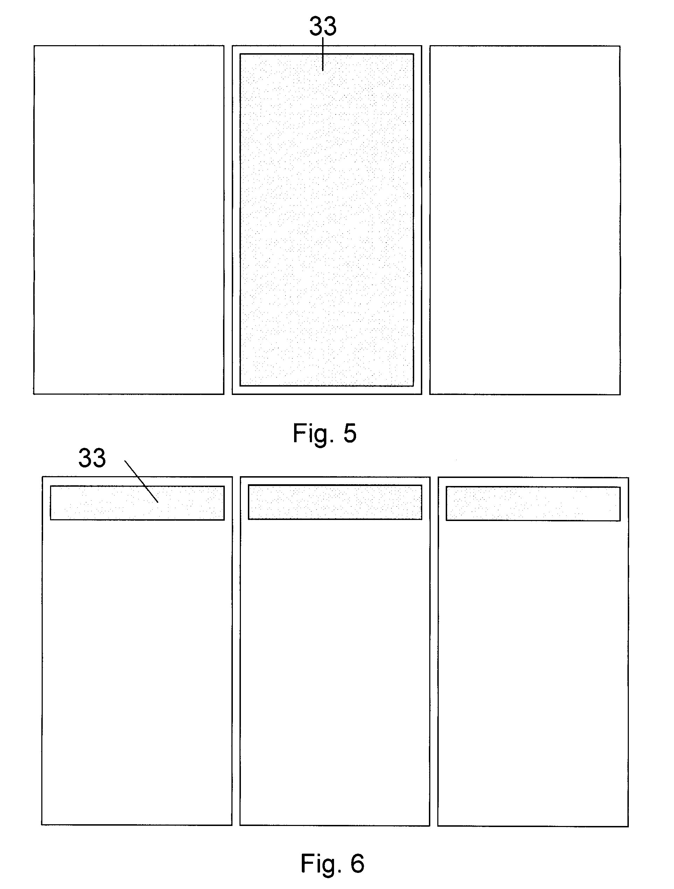

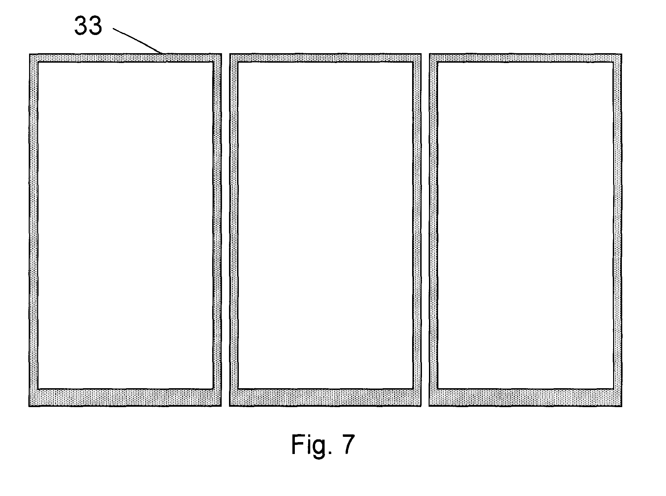

In another embodiment of the invention the window is not fully covered by the solar cell, as schematic shown in Fig. 5 The power consumption of the conducting polymer is so low that it is not necessary to have the whole window layered by a solar cell. It is enough to have a small band of photovoltaic material at the top side of a window, as shown in fig. 6 to supply the current needed. The solar cell structure could be like a small frame of the window, not influencing the whole transparent part, see fig. 7.

A number of embodiments have been described above. However, it is obvious that the design could be varied without deviating from the inventive idea of providing a more energy efficient climate control system comprising smart windows.

Therefore the present invention should not be regarded as restricted to the above disclosed embodiments, but can be varied within the scope of the appended claims. For example, the climate control system can be implemented in all kinds of constructions, such as ships, land vehicles (cars, busses), airplanes etc., and the constructive modifications needed for such implementations pertains to the field of the person skilled in the art, requiring no inventive effort.

## Claims

1. Climate control system comprising at least one dimmable device (12) capable of variably reducing the transmission of radiation through a window, and a climate control unit (8) coupled to and adapted to control the dimmable device (12), **characterized in that** the dimmable device includes at least one inherent conductive polymer and at least one ionic liquid electrolyte, the dimmable device is controlled to change colours and/or dimming levels by applying a voltage pulse of a first electrical polarisation for darkening and a second reverse polarized voltage pulse for bleaching.

2. Climate control system wherein the duration of voltage pulses is in the range of 1 ms to 1000 ms.

3. Climate control system according claim 1 wherein the climate control unit (8) is arranged to set the dimming device (12) in a non-transparent mode, in response to an incoming daylight level sensor (20), and in that the climate control unit (8) is arranged to set the dimmable device (12) in a transparent mode, in response to the at least the same incoming daylight level sensor (20).

4. Climate control system according to claim 1 or 2, **characterized in that** the climate control system further comprises a cooling/heating system (14), which is controlled by the climate control unit (8).

5. Climate control system according to any of the claims 1 to 3, **characterized in that** the climate control system further comprises an illumination system (16), which is controlled by the climate control unit (8).

6. Climate control system according to claim 1 wherein the power supply is at least one photovoltaic element, installed on the electro chromic layer.

7. Climate control system according to claim 6 wherein the photovoltaic element covers at least a part of the window.

8. Climate control system according to claim 7 wherein the photovoltaic element forms a frame on the window.

9. Climate control system according to claim 7 wherein the photovoltaic element forms a sun shield in form of a band on top of the window.

10. Climate control system according to claim 6 wherein the photovoltaic element is a solar cell transparent in visible region of light.

## Amended claims

### Amended claims in accordance with Rule 137(2) EPC.

**1.** Climate control system comprising at least one dimmable device (12) capable of variably reducing the transmission of radiation through a window, and a climate control unit (8) coupled to and adapted to control the dimmable device (12), **characterized in that** the dimmable device includes at least one inherent conductive polymer and at least one ionic liquid electrolyte, the dimmable device is controlled to change colours and/or dimming levels by applying a voltage pulse of a first electrical polarisation for darkening and a second reverse polarized voltage pulse for bleaching, without constant current to maintain the status.

**2.** Climate control system wherein the duration of voltage pulses is in the range of 1 ms to 1000 ms.

**3.** Climate control system according claim 1 wherein the climate control unit (8) is arranged to set the dimming device (12) in a non-transparent mode, in response to an incoming daylight level sensor (20), and in that the climate control unit (8) is arranged to set the dimmable device (12) in a transparent mode, in response to the at least the same incoming daylight level sensor (20).

**4.** Climate control system according to claim 1 or 2, **characterized in that** the climate control system further comprises a cooling/heating system (14), which is controlled by the climate control unit (8).

**5.** Climate control system according to any of the claims 1 to 3, **characterized in that** the climate control system further comprises an illumination system (16), which is controlled by the climate control unit (8).

**6.** Climate control system according to claim 1 wherein the power supply is at least one photovoltaic layered element, installed on the electro chromic layer.

**7.** Climate control system according to claim 6 wherein the photovoltaic layered element covers at least a part of the window.

**8.** Climate control system according to claim 7 wherein the photovoltaic layered element forms a frame on the window.

**9.** Climate control system according to claim 7 wherein the photovoltaic layered element forms a sun shield in form of a band on top of the window.

**10.** Climate control system according to claim 6 wherein the photovoltaic layered element is a solar cell transparent in visible region of light.
